# EUROPEAN PATENT APPLICATION

(11) **EP 0 936 060 A1**
(43) Date of publication of application: **18.08.1999**
(21) Application number: 98301075.2
(22) Date of filing: 13.02.1998
(51) Int. Cl.: B32B 5/26, C03C 1/02, C03C 25/02, D04H 1/70, D04H 13/00

(54) **Man-made vitreous fibre products and their use in fire protection systems**

(71) Applicant: Rockwool International A/S, DK-2640 Hedehusene (DK)
(72) Inventor: Pedersen, Kurt Munk, 4140 Borup (DK)
(74) Representative: Lawrence, Peter Robin Broughton

(57) **Abstract**

A layered fire or high temperature protection product is provided which comprises at least two fibre layers formed from bonded man-made vitreous fibre web, of which at least one is an endothermic fibre layer which contains distributed through the fibre web a particulate endothermic material which is a carbonate and/or a hydrate and is heat stable at temperatures up to 200°C and decomposes endothermically at a temperature above 200°C, and at least one endothermic binder layer which is positioned between two fibre layers and which is formed from a material capable of binding two fibre layers together and capable of decomposing endothermically at a temperature above 40°C.

## Description

This invention relates to man-made vitreous (MMV) fibre products which are constructed so as to give improved fire and high temperature protection.

It is known to use materials formed from MMV fibres as, for instance, inlays for fire doors, to retard the transfer of heat and fire. Such products are generally made by providing a mineral melt, fiberising the melt and collecting the resultant fibres as a primary air-laid web, which is then cross-lapped to form a secondary web. This web generally additionally comprises binder materials which are often added during the fiberisation stage. The secondary web is cured and compressed to form a slab of MMV fibre product which is usually rigid.

It is known to include other materials in the bonded web in order to improve resistance to high temperatures. For instance, GB 926,749 discloses the introduction of materials such as kieselguhr and hydrated substances which liberate water at high temperatures into a non-uniform manner in a web of glass fibres. This is said to be done for the purpose of preventing fusion of the glass fibres without the need to use specially designed fibres which themselves resist melting at high temperatures. The amounts of additive mentioned are generally rather high, in particular at least 50 or even 70 to 75% based on the total weight of the web.

Our International Publication WO97/20780 discloses improved fire and high temperature protection products which include particulate endothermic material distributed throughout the air-laid web which can be magnesium hydroxide or a carbonate which undergoes no endothermic decomposition at temperatures up to 200°C but decomposes endothermically at above 200°C. Additionally the material may be one having mean particle size above 5 µm which is bonded to the MMV fibres of the web and is substantially uniformly distributed through the web. In this case, the particulate endothermic material may also be particles of a hydrate which are heat stable at up to 200°C and decompose endothermically at the temperature above 200°C.

Although this latter type of product gives good fire and high temperature protection, it would be desirable to further improve the fire and high temperature protection properties of MMV fibre products.

Another fire retardant product is described in GB 1558073. This describes layered products formed from layers of MMV fibre joined together by layers of binding agent. The layers of fibre are standard bonded mineral wool layers. The binding agent is described in the examples to be a mixture of kaolin, water glass solution and water. Another binding agent used has a similar composition but is the commercial material "Kollimal" available from Henkel. The preferred and exemplified products contain at least 4 or 5 layers of mineral wool joined by 3 or 4 layers of binding agent. The density of the wool is said to be from 200 to 400 kg/m³. This is probably because fire protection properties are known to increase, for a given thickness, with increasing density.

It would be desirable to be able to improve the fire protection properties of MMV fibre products, in particular without the need to provide products of very high density.

According to the invention we provide a layered fire or high temperature product comprising
at least two fibre layers formed from bonded MMV fibre web, of which at least one layer is an endothermic fibre layer and contains distributed through the web a particulate endothermic material which is a carbonate and/or a hydrate and is heat stable at temperatures up to 200°C and decomposes endothermically at a temperature above 200°C,
and at least one endothermic binder layer between two fibre layers which is formed from a material capable of binding two fibre layers together and capable of decomposing endothermically at a temperature above 40°C.

We find that, surprisingly, the combination of the inclusion of a fire protection material (particulate endothermic material) within one or more of the fibre layers and a fire protective binder layer (endothermic binder layer) gives improvements in fire and/or high temperature protection which are greater than the sum of the improvements obtained using the two types of fire protection materials separately. That is, there appears to be some synergistic effect occurring whereby an effect is obtained greater than the effect which would be expected based on addition of the two observed effects separately.

In particular, we observe synergistic improvements even with wool of low density and in products in which, unlike those exemplified in GB 1,558,073, only two layers of MMV fibre and one layer of binder are used.

In this specification, when we discuss "fire and high temperature products" and "fire and high temperature protection" we mean protection against the large and rapid and usually unintended increases in temperature which come about in the event of fire or other event resulting in rapid build-up of high temperature over a relatively short period of time.

The layered product of the invention comprises at least two fibre layers. These are formed from bonded MMV fibre web. Preferably the web is rigid for at least one or two, more preferably all, fibre layers.

The fibres can be made by any known method for producing MMV fibres. Usually this is done by applying mineral melt to a rotating fiberising rotor, throwing the melt from the periphery of the rotor as fibres to form a substantially annular cloud of fibres, carrying the fibres axially from the rotor towards a collector surface and collecting the fibres on the collector surface as a web. The process is usually carried out on an apparatus known as a spinner, comprising one or more rotors. The spinner can be of the spinning cup type described in EP 530843 or of the Downey type as described in US 2944284 and US 3343933 but preferably however the rotor has a solid periphery and is mounted about a horizontal axis, and is constructed so that melt is poured onto the periphery of the rotor and flung from it as fibres. Particularly preferably the spinner is a cascade spinner and at least two and preferably 3 or 4 rotors of this type are used, so that melt is flung from the first rotor partially as fibres and partially onto a second rotor, from which further melt is flung partially as fibres and partially onto the next rotor. A suitable cascade spinner is described in, for instance, WO92/06047.

The air-laid web which is collected on the collector surface may be the web which forms the fibre layer, but preferably the web collected on the collector surface is a primary web which is then cross-lapped on itself to form a secondary web. The secondary web then forms the fibre layer, if desired after further treatment.

The MMV fibre web which forms the fibre layers is a bonded web. Usually bonding is achieved by spraying binder material into the cloud of fibres as they are produced and during collection. The binder can be any of the binders conventionally used for bonding MMV fibre products. The amount of binder is generally in the range 0 to 12%, for instance 2 to 6%, by weight of the fibre layer.

After collection of the fibres as an air-laid web and optional cross-lapping the web of MMV fibres is generally compressed and passed through a curing oven to effect curing of the binder. Temperatures in the curing oven are often up to 200°C.

The MMV fibre layers may be of high or low density. For instance they may have density up to 350 kg/m³, preferably up to 300 kg/m³. Preferably they are of density (including any particulate endothermic material) not more than 200 kg/m³, preferably not more than 180 kg/m³, more preferably not more than about 170 or 150 kg/m³. Density is generally at least 10, preferably at least 50 kg/m³.

Of the fibre layers, at least one is an endothermic fibre layer containing particulate endothermic material distributed through the fibre web. The particulate endothermic material can be included in the MMV fibre web in various ways. For instance it can be added by spraying the particulate endothermic material into the annular cloud of fibres from a position outside the annular cloud, before the fibres are collected on the collecting belt (as in GB 926,749). Preferably the material is not incorporated in this way but is sprayed into the annular cloud of fibres from a position within the cloud, as described in our international publication WO97/20780 using the method of our publication WO97/20781 and/or using the apparatus described in our international publication WO97/20779. This latter method and apparatus provide a fibre layer in which the particulate endothermic material is distributed uniformly through the MMV fibre web.

Preferably also the particulate endothermic material is bonded to the MMV fibre web. This is preferred in order that there is little or no dusting of the endothermic particulate material from the web during transport and handling. Small amounts of dusting are acceptable since the product can be covered on each surface by a fire resistant and temperature stable covering such as aluminium foil or other covering, but excessive dusting is preferably avoided. A suitable test for determining whether or not satisfactory bonding has been obtained is that described by Schneider et al, Ann. Occup. Hyg., vol. 37, No. 6, pp 631 to 644, 1993. The binder used for bonding the MMV fibre web also has the effect of bonding the endothermic particulate material into the web.

A non-uniform distribution of the particulate endothermic material through the MMV fibre web forming a fibre layer can be obtained for instance as in GB 926749.

The density of the particulate endothermic material in an endothermic fibre layer is usually from 20 to 250 kg/m³, preferably from about 40 to about 200 kg/m³, often from 60 to 100 kg/m³. The percentage of particulate endothermic material by weight of the layer is preferably at least 5 or 10% by weight of the endothermic fibre layer, usually from 5 to 50 wt.%, in particular up to 30wt.%. It may however be as high as 70wt.%.

The product of the invention comprises at least one endothermic fibre layer. Preferably all the fibre layers are endothermic layers and contain particulate endothermic material. However, the invention also encompasses products which contain fibre layers which do not contain particulate endothermic material.

Preferably the distribution of the particulate endothermic material is symmetrical across the layered product (ie in cross-section showing all the layers). For instance, one suitable product consists of three fibre layers bonded together by two endothermic binder layers. The interior fibre layer contains particulate endothermic material distributed uniformly through the MMV fibre web of that layer and the two external layers do not contain particulate endothermic material. Another suitable product consists essentially of two endothermic fibre layers through which particulate endothermic material is uniformly distributed, bound together by one endothermic binder layer.

Non-symmetrical products may also be used according to the invention. For instance a further suitable product consists essentially of two fibre layers bound together by one endothermic binder layer. Only one of the fibre layers is an endothermic fibre layer and contains particulate endothermic material. Such products are useful in circumstances where the direction from which the fire or unintended high temperature will come is known. In use, the product of this type is disposed so that the endothermic fibre layer is toward the direction of potential fire or high temperature.

Any of these products may be provided with known surface coatings, such as paint etc.

The particulate endothermic materials can be any of those described for use in WO97/20780.

The fire protection additive is an endothermic material which, in the particulate form in which it is provided in the product of the invention, is heat stable at temperatures up to 200°C. That is, it does not undergo substantial endothermic decomposition at temperatures of 200°C or less, preferably 240°C or less, in the form in which it is provided.

One way of achieving this heat stability is by providing a particulate additive formed from a material which has the chemical property that it does not undergo decomposition at temperatures below 200°C. That is, molecules of the material can decompose only at temperatures above 200°C.

Suitable materials of this type liberate carbon dioxide and/or water of crystallisation and include magnesium hydroxide, calcite (calcium carbonate), dolomite, siderite, aragonite, magnesite, brucite, magnesium carbonate, barium carbonate, barium hydroxide, ferric hydroxide, ferrous hydroxide, pyrite and silicon compounds having water of crystallisation which is not liberated at temperatures up to 200°C. Magnesium hydroxide is preferred.

Materials which liberate carbon dioxide, preferably at temperatures above 400°C, more preferably above 600°C, can be used. Examples include calcium carbonate, which liberates carbon dioxide endothermically at temperatures in the range 700 to 1,000°C. Other suitable materials are crystalline materials which liberate water of hydration at above 200°C, preferably above 240°C, for instance 270 to 370°C or higher.

The particulate endothermic material usually has mean particle size above 5µm. Normally 90% by weight of the particles have size above 5µm. Preferably the particle size is at least 90% above 10µm, more preferably at least 90% above 15µm. For materials such as those discussed above which have the chemical property that they do not undergo any endothermic decomposition below 200°C, size can be at least 90% below 200µm, for instance at least 90% below 100µm. Expressed as mean particle sizes, the preferred ranges are 5 or 10 to 100µm, preferably 10 to 70µm, most preferably 15 to 50µm. A mean particle size of around 15 to 50µm, often around 35µm, is often satisfactory.

Heat stable endothermic particulate materials can also be provided using materials which have the chemical property that their molecules do undergo endothermic decomposition at temperatures below 200°C but are provided in such a form that they are protected from exposure to high temperature and the particles do not undergo substantial decomposition when the fibre layer containing them is subjected to temperatures up to 200°C. Such particulate materials may undergo small amounts of decomposition at temperatures of up to 200°C, but do not undergo substantial decomposition and thus are heat stable.

For instance, materials which would liberate carbon dioxide and/or water of crystallisation at temperatures below 200°C when in fine particle form can be provided in the form of especially coarse particles. Materials of this type in the form of very coarse particles can withstand temperatures up to 200°C, often up to 240°C, without substantial decomposition. Suitable mean particle sizes are at least 100µm, often at least 500µm, and even up to 3 mm, such as from 0.5 to 1.5 mm.

Preferred materials of this type are aluminium hydroxide, which liberates all of its water of crystallisation at about 185°C when in fine grain form, but in coarse grain form is stable up to 200°C.

Materials, or mixtures of materials, which have different endothermic reactions at two or more temperatures are desirable since this spreads fire resistance over a large range of temperatures. For instance a mixture of hydrate and carbonate is desirable for this reason.

Coarse particle size of the endothermic material is advantageous when bonding of the material into the web is required. Thus fine grained materials require more binder for satisfactory binding properties than do coarse grained materials. For instance in the invention good bonding can be achieved when the amount of binder is about the same or not more than 50 to 100% more than the levels of binder in conventional MMV fibre products (which are often about 0.5 to 5%, preferably 1 to 3%, based on weight of the fibre layer).

Materials which can be used which do not require large particle size are magnesium hydroxide and carbonates that decompose endothermically above 200°C. Preferably however these materials do have mean particle size above 5µm.

The MMV fibre layers are bound together with one or more layers of endothermic binder. This is formed from a material having the capacity to bind two fibre layers together but also the capacity to undergo endothermic decomposition at a temperature above 40°C.

The binder layer is heat stable up to 40°C, preferably up to 100°C, more preferably up to 150°C, most preferably up to 200°C. As with the endothermic particulate material, the material forming the binder layer may be such that its chemical nature is that it cannot undergo any decomposition up to the specified temperature. Alternatively it can be composed of molecules which do undergo such decomposition below the specified temperature but is provided in a form, such as very coarse particles, which prevents substantial decomposition of the material when the product containing the particles is below this temperature.

The binder layer is also capable of holding together two MMV fibre layers in the product. At least one of the binder layers must have endothermic capacity. All of the binder layers must have binding capacity. Preferably all binder layers also have endothermic capacity.

The binder layer may be composed of a mixture of materials which decompose endothermically at above 40°C and materials which have binding capacity, but preferably it comprises at least one material which has both binding capacity and decomposes endothermically at above 40°C. Suitable materials having both properties include silicates, usually in sodium or potassium or other alkali metal salt form, which release crystal water endothermically. Clays such as china clay are also suitable. These release internal water endothermically. Some phosphates also possess binding and/or endothermic properties, but usually possess only one of these properties.

The binder layer may comprise materials, such as aluminium hydroxide, magnesium hydroxide and carbonates, of the type described above for use as the endothermic particulate material, in order to boost the endothermic properties. If used, these are preferably present in an amount of from 1 to 90%, more preferably from 10 to 70%, by weight of the binder layer. If the material has binding capacity the amount may be up to 100%.

The binder layer may comprise organic materials, which are usually included for their binder properties, but preferably the materials making up the binder layer are at least 80 wt.% inorganic, preferably at least 90 or 95 wt.% inorganic and most preferably substantially 100% inorganic.

The binder layers are disposed between two MMV fibre layers, that is they are internal layers. Preferably each binder layer is adjacent to at least one endothermic fibre layer.

Generally the thickness of the binder layers is substantially less than that of any of the fibre layers. The thickness of the binder layer is generally defined in terms of the weight of material per unit area of the surface of the fibre layers it binds together. Preferred amounts of material for the binder layer range from 0.2 to 10 kg/m² (dry material in the binder layer based on area of fibre layers bound together).

The MMV fibre product may contain any convenient number of MMV fibre layers. The number B of layers of binder material is F-1, where F is the number of fibre layers. Preferably the product comprises two fibre layers joined by a single binder layer. Preferably the two fibre layers have substantially the same density and concentration of particulate endothermic material.

The layered product generally has a total thickness of from 5 to 500 mm, preferably 20 to 200 mm. Thicknesses of around 60 mm are often suitable.

The products are made by providing at least two fibre layers as defined and bonding them together with the required number of binder layers. Fibre layers which are required to be identical can be provided by producing a single layer of fibre of twice the required thickness and dividing this longitudinally to provide two (or more) fibre layers.

The binder layers are normally provided as an aqueous slurry which is applied to the fibre layers to be bonded together and then allowed to dry after the fibre layers have been placed in contact.

The products of the invention can be used in any situation where protection from fire or high temperature is required. For instance they may be used as inserts for fire doors, airducts, suspended ceilings, horizontal/vertical membranes (according to CEN/TC 127, N946 and 947), fire protection (cladding) of load bearing construction elements (eg beams, columns) of steel, concrete or wood.

### Examples

In the following examples 5 samples were tested for fire protection. The fire test was carried out as follows.

### Fire Test

Fire tests were carried out in a small scale furnace with an opening in one of the sides in which a vertical test specimen can be installed. Fire resistance measured in this furnace is comparable with results in furnaces according to ISO 834.

In the fire test, each test specimen is installed in a test frame made of a U channel and provided on each face with a 0.7 mm thick galvanised steel sheet.

On the external side of the specimen three thermocouples are installed to measure the temperature during the fire test.

The furnace is heated in accordance with the time-temperature curve described in ISO 834.

Each fire test is continued until the average temperature on the external side has increased to 140° above ambient temperature. The time required to reach this temperature is noted as "fire resistance".

### Specimens

### Specimen 1 (Comparative)

A mineral wool board prepared by the process described in Patent Publication No. WO97/20780 using magnesium hydroxide as the fire protection material. The board had a thickness of 60 mm and a total density of about 189 kg/m³, made up of stone wool having a density of about 110 kg/m³ and magnesium hydroxide at a density of about 79 kg/m³.

### Specimen 2 (Invention)

A board was prepared as for specimen 1 with the difference that the density of magnesium hydroxide was 82 kg/m³. The board was cut vertically down the centre to form two boards. These were then bound together using 3.36 kg/m² of a mixture of 48% sodium silicate and 52% china clay as the endothermic binder layer. This specimen was allowed to dry and the final distribution of binder mixture was found to be approximately 2 kg/m².

### Specimen 3 (Comparative)

A standard mineral wool board having thickness 60 mm and density of about 110 kg/m³.

### Specimen 4 (Comparative)

A standard mineral wool board was prepared having thickness of 60 mm and density of about 150 kg/m³. The board was cut vertically down the centre in the same way as for specimen 2 and the two boards joined with 3.3 kg/m³ of the same binder mixture as for specimen 2. The specimen was allowed to dry and the final distribution of the binder mixture was found to be approximately 2 kg/m².

Each specimen was then subjected to the fire test described above and results are shown below in Table 1.

**Table 1**

| Specimen No: | Product Description | Measured fire resistance ΔT=140°C |
|---|---|---|
| 1 | Stone wool 110 kg/m³ | 64 min |
| | magnesium hydroxide 79 kg/m³ | |
| 2 | stone wool 110 kg/m³ | 84 min |
| | magnesium hydroxide 79 kg/m³ | |
| | sodium silicate/china clay in centre 2 kg/m² | |
| 3 | standard stone wool 110 kg/m³ | 45 min |
| 4 | standard stone wool 150 kg/m³ | 59 min |
| 5 | standard stone wool 150 kg/m³ | 66 min |
| | sodium silicate/china clay in centre 2 kg/m² | |

Specimen 2 is according to the invention. Specimen 3 is standard stone wool with no fire protection additives and specimen 1 is the same standard stone wool having magnesium hydroxide as fire protection additive distributed uniformly throughout the wool slab.

Comparison between specimens 3 and 1 shows than an improvement in the fire resistance time of 19 minutes, or about 42%, is obtained by the inclusion of magnesium hydroxide.

Specimen 4 is a further standard stone wool sample of slightly higher density, which has, as expected, greater fire resistance than specimen 3 (materials of the same thickness generally show increased fire resistance properties as density increases). Inclusion simply of a binder layer in the centre of the stone wool slab (to give specimen 5) gives an increase in fire resistance of 7 minutes, or about 12%.

However, when both the magnesium hydroxide in the web and the binder layer are used, in specimen 2, the increase over specimen 3 is 39 minutes, or about 87%. This is far greater than the effect which would be predicted on the basis of addition of the two effects. The increase might be expected to be about 19 + 7 = 26 minutes. The actual increase is 39 minutes, ie 13 minutes longer than expected. Some synergistic effect appears to be occurring.

## Claims

1. A layered fire or high temperature protection product comprising
at least two fibre layers formed from bonded MMV fibre web, of which at least one is an endothermic fibre layer which contains distributed through the fibre web a particulate endothermic material which is a carbonate and/or a hydrate and is heat stable at temperatures up to 200°C and decomposes endothermically at a temperature above 200°C, and at least one endothermic binder layer which is positioned between two fibre layers and which is formed from a material capable of binding two fibre layers together and capable of decomposing endothermically at a temperature above 40°C.

2. A product according to claim 1 in which the density of each MMV fibre web is not more than 180 kg/m³, more preferably not more than 150 kg/m³.

3. A product according to claim 1 or claim 2 consisting of two endothermic fibre layers and one binder layer between the two endothermic fibre layers.

4. A product according to any preceding claim in which the material which forms the binder layer consists essentially of a mixture of alkali metal silicate, preferably sodium silicate, and clay, preferably china clay.

5. A product according to any preceding claim in which the particulate endothermic material has a mean particle size above 5 µm, preferably from 10 to 500 µm, more preferably from 10 to 100 µm.

6. A product according to any of claims 1 to 4 in which the particulate endothermic material has a mean particle size of from 0.5 to 3 mm.

7. A product according to any preceding claim in which the particulate endothermic material is magnesium hydroxide.

8. A product according to any preceding claim in which the MMV fibre web is an air-laid web formed by providing a primary web of fibres and cross-lapping the primary web to form a secondary web.

9. A product according to any preceding claim in which the amount of material in each binder layer is from 0.2 to 10 kg (dry material in the binder layer)/m² (area of fibre layers bound together).
